# EUROPÄISCHE PATENTSCHRIFT

(11) **EP 0 979 964 B1**
(45) Veröffentlichungstag und Bekanntmachung des Hinweises auf die Patenterteilung: **07.04.2004**
(21) Anmeldenummer: 99115688.6
(22) Anmeldetag: 09.08.1999
(51) Int. Cl.: F16K 1/38, F16K 11/20

(54) **Ventilanordnung zur Steuerung des Materialflusses in einer Beschichtungsanlage**
Valve device for controlling the flow of material in a coating installation
Ensemble de soupapes pour la commande de l'écoulement du matériau dans une installation de revêtement

(30) Priorität: 12.08.1998 DE 19836604
(43) Veröffentlichungstag der Anmeldung: 16.02.2000
(60) Teilanmeldung: 03012550.4
(73) Patentinhaber: Dürr Systems GmbH, 70435 Stuttgart (DE)
(72) Erfinder: Baumann, Michael, Dipl.-Ing., 74223 Flein (DE); Rupertus, Frank, 74321 Bietigheim-Bissingen (DE)
(74) Vertreter: Heusler, Wolfgang, Dipl.-Ing.

(56) Entgegenhaltungen:
- US-A- 5 368 273
- US-A- 5 706 859

## Beschreibung

Die Erfindung betrifft eine Ventilanordnung mit einer Ventileinheit zur Steuerung des Materialflusses in einer Beschichtungsanlage gemäß dem Oberbegriff des Anspruchs 1.

Eine solche Ventilanordnung eignet sich insbesondere für die Farbwechselblöcke und Funktionsventile zur Steuerung des Farbflusses im Bereich der Lackiertechnik, namentlich bei der Serienbeschichtung von Kraftfahrzeugkarossen (DE-A 3221326). In den bekannten Farbwechselblöcken der hier betrachteten Art ist der zentrale, zum Zerstäuber oder sonstigen Applikationsorgan führende Farbkanal, in den alle nebeneinander und ggf. auf gegenüberliegenden Seiten des Farbkanals angeordneten Ventileinheiten münden, üblicherweise eine geradlinige zylindrische Bohrung im Farbwechselblock mit einem Durchmesser von z.B. etwa 5 mm. Durch die Einmündungen kommt es zu Erweiterungen oder Hinterschneidungen in der Bohrungsoberfläche, die sich beim Farbwechsel ungünstig auf die Spülbarkeit auswirken. Trotz erheblichen Spülmittelverbrauchs und relativ langer Spülzeiten können Farbreste in dem Farbkanal zurückbleiben, die bei einem Farbwechsel zu Qualitätsfehlern der Beschichtung führen können. Außerdem erfordert der kreisförmige Kanalquerschnitt bei gegebenem Kanalvolumen einen relativ großen Abstand zwischen der Kanalachse und den senkrecht zur Ventilnadel einmündenden Farbzuleitungen.

Spülprobleme können sich auch im Bereich der in den Ventilinnenraum führenden Farbeinlaßkanäle ergeben. Beispielsweise erfolgt die Farbzuleitung aus dem Ventilgehäuse zur Farbnadel bei gewissen bekannten Konstruktionen durch einen Ringkanal, der über radial zur Ventilmitte gerichtete Bohrungen die Farbe zur Farbnadel leitet. Hierbei sind schlechte Spülbarkeit und erhöhte Druckverluste festzustellen.

Der Erfindung liegt die Aufgabe zugrunde, eine Ventilanordnung anzugeben, die besser spülbar ist als vergleichbare bekannte Anordnungen und geringe Druckverluste für das Beschichtungsmaterial ermöglicht.

Diese Aufgabe wird durch die in den Ansprüchen gekennzeichnete Ventilanordnung gelöst.

Der allgemein ovale Querschnitt des Auslaßkanals erlaubt vor allem sehr gute Spülbarkeit und außerdem relativ geringe Druckverluste, u.a. aufgrund seines bei der gegebenen geringen Abmessung in Achsrichtung der Ventilnadel relativ großen Volumens. Die Spülbarkeit ist um so besser, je weniger die Übergänge zwischen den vorzugsweise geraden Längsseiten der Querschnittsfläche und den runden Schmalseiten als Ecken ausgebildet sind, was sich durch Fertigung des Kanals und des ihn enthaltenden Gehäuseblocks in Spritzgußtechnik oder durch ein anderes geeignetes Formverfahren erreichen läßt. Die vorzugsweise geraden Längsseiten erlauben den Einbau der Ventileinheit ohne Beeinträchtigung der Kanaloberfläche.

Besondere Vorteile ergeben sich ferner durch die spezielle Dichtungskonstruktion gemäß Anspruch 6, die einen querschnittsgleichen und spaltfreien Übergang von dem in die Ventileinheit führenden Materialzufuhrkanal zu dem Einlaßkanal des Innengehäuseteils ermöglicht. Damit wird auch in diesem Bereich eine sehr gute Spülbarkeit und strömungsgünstige Materialführung ohne wesentliche Druckverluste erreicht.

Aus der US-A 5 368 273 ist es bei einer Gasturbine an sich schon bekannt, in deren Venturidüse ein Nadelventil anzuordnen, in das über den Umfang verteilte Einlasskanäle für den Brennstoff mit ovalem Querschnitt münden. Die Längsrichtung der ovalen Querschnittsfläche liegt hier parallel zu der Achse des Nadelventils.

An dem in der Zeichnung dargestellten bevorzugten Ausführungsbeispiel wird die Erfindung näher erläutert. Es zeigen:
- Fig. 1: einen Schnitt durch die Ventilanordnung längs der Ventilnadelachse;
- Fig. 2: eine Einzeldarstellung einer Ventileinheit der Anordnung nach Fig. 1;
- Fig. 3: eine Seitenansicht der in Fig. 2 dargestellten Ventileinheit;
- Fig. 4: eine Seitenansicht einer Ventileinheit ähnlich Fig. 3, jedoch mit einem anderen Steuergehäuse;
- Fig. 5: die Seitenansicht der Steuereinheit gemäß Fig. 4, in der jedoch das dort gezeigte Steuergehäuse durch ein Magnetventil ersetzt ist.

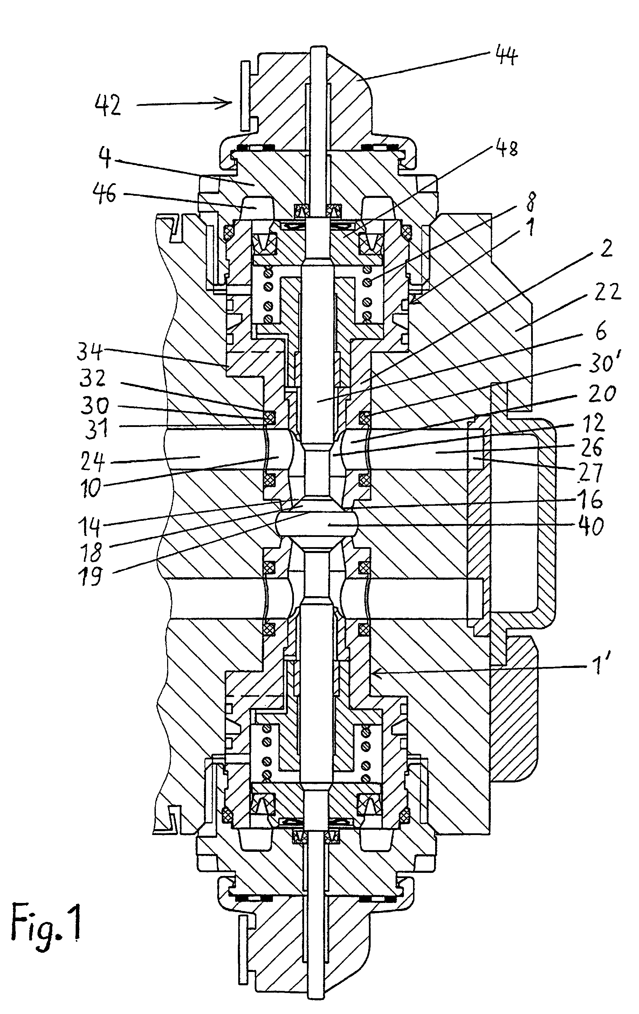

In Fig. 1 ist eine erste Ventileinheit 1 erkennbar, die hauptsächlich aus einem allgemein zylindrischen Innengehäuse 2, einem auf das äußere Ende des Innengehäuses 2 aufgesetzten Endgehäuse 4 und einer darin längs ihrer Achse verschiebbar gelagerten Ventilnadel 6 besteht, welche von einer Druckfeder 8 mittels der aus der Zeichnung ersichtlichen Konstruktion in Ventilschließstellung beaufschlagt ist. Senkrecht zur Ventilnadelachse führt durch die zylindrische Wand des Innengehäuses 2 ein Einlaßkanal 10 für das Beschichtungsmaterial, der durch den Innenraum 12 der Ventileinheit 1 mit einer kreisförmigen Auslaßöffnung 14 in Verbindung steht, welche an dem zu dem Endgehäuse 4 entgegengesetzten zylindrischen Ende des Innengehäuses 2 einen konischen Ventilsitz 16 bildet. In der dargestellten Schließstellung liegt an dem Ventilsitz die entsprechend konische, sich in Richtung des Innenraums 12 verjüngende Dichtfläche 18 der Ventilnadel 6 an. Die konische Dichtfläche 18 bildet das freie Ende der Ventilnadel und verläuft bis zu deren ebenen, senkrecht zur Nadelachse liegenden Stirnfläche 19, die in der Schließstellung etwa mit dem axial äußersten Rand des zylindrischen Innengehäuses 2 fluchtet.

Bei dem dargestellten Beispiel steht der Einlaßkanal 10 über den Innenraum 12 ferner mit einem zu dem Kanal 10 koaxial auf der gegenüberliegenden Seite durch die Wand des Innengehäuses 2 führenden Rücklaufkanal 20 in Verbindung. Zumindest bei geschlossenem Ventil zirkuliert das Beschichtungsmaterial kontinuierlich durch die Kanäle 10 und 20 von und zu einem externen Umlaufsystem. Darstellungsgemäß ist die bisher beschriebene Ventileinheit weitgehend rotationssymmetrisch, d.h. mit Ausnahme einer noch zu erläuternden Positioniernase, und auch die Kanäle 10 und 20 sind bezüglich der Nadelachse symmetrisch zueinander.

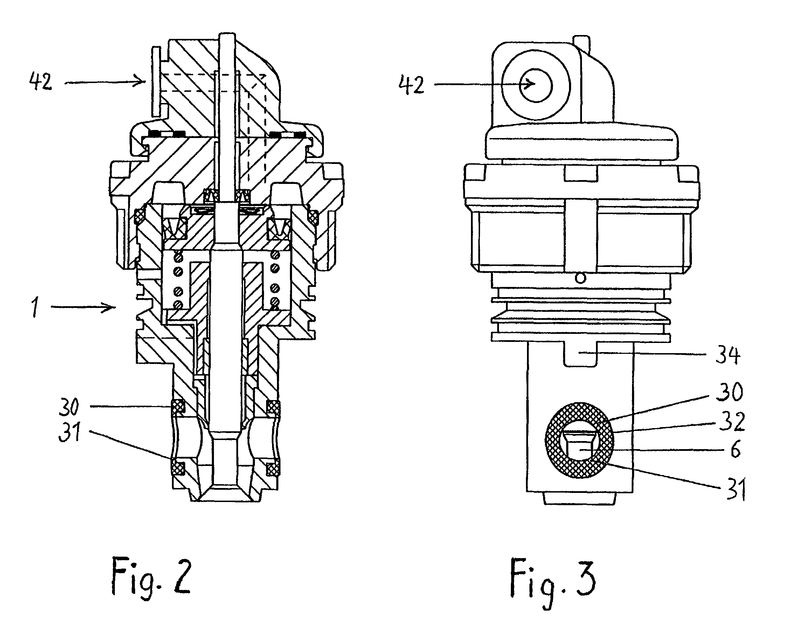

Die beschriebene Ventileinheit 1, die in Fig. 2 zur Verdeutlichung auch für sich allein dargestellt ist, sitzt gemäß Fig. 1 in einem entsprechend den zylindrischen Außenflächen des Gehäuseteils allgemein hohlzylindrisch geformten Innenraum eines äußeren Gehäusekörpers 22, bei dem es sich beispielsweise um einen Farbwechselblock handeln kann. Ebenso könnte die Ventileinheit 1 auch in einem Funktionsventilblock z.B. innerhalb eines Zerstäubers sitzen. Der äußere Gehäusekörper 22 enthält mit den Kanälen 10 und 20 des Innengehäuses 2 fluchtende Materialzufuhr- bzw. Rücklaufkanäle 24 bzw. 26, wobei der Kanal 26 über einen weiteren Umlaufkanal 27 mit dem schon erwähnten Materialumlaufsystem verbunden ist. Wesentlich ist hierbei vor allem die jeweilige Dichtung an den aneinanderstoßenden Kanälen des Innengehäuses und des äußeren Gehäusekörpers. Sie besteht aus einem ringförmigen Dichtungselement 30 aus Elastomerwerkstoff, beispielsweise einem O-Ring, der die Stoßstelle umschließend zwischen der zylindrischen Außenfläche des Innengehäuses 2 und der das Innengehäuse umschließenden hohlzylindrischen Innenfläche des äußeren Gehäusekörpers 22 sitzt, so daß der von dem Dichtungselement gebildete Ring entsprechend den zylindrischen Flächen des Innengehäuses 2 und des Gehäusekörpers 22 gebogen ist. Auf der Seite der Kanäle 20, 26 ist symmetrisch in entsprechender Weise ein Dichtungselement 30' vorgesehen.

Bei dem dargestellten Beispiel ist das ringförmige Dichtungselement 30 in eine die Kanäle 10, 24 umgebende ringförmige Nut 32 in der zylindrischen Außenfläche des Innengehäuses 2 eingesetzt. Das Dichtungselement 30 ist auch in den Draufsichten der Fig. 3, 4 und 5 erkennbar. Es könnte stattdessen auch in den äußeren Gehäusekörper 22 eingesetzt sein.

Zweckmäßig kann das ringförmige Dichtungselement 30 an seiner Innenseite einen parallel zu der Außenfläche des Innengehäuses 2 liegenden flachen, schmalen, flanschartigen Rand 31 (vgl. Fig. 2 und 3) haben, der in einer ihm entsprechenden, an den Kanal angrenzenden flachen Ausnehmung in der Außenseite des Innengehäuses zwischen dem äußeren Rand der Nut 32 und dem Kanal 10 angeordnet ist und somit einen spalt- und hinterschneidungsfrei abgedichteten Übergang zwischen den Kanälen 10 und 24 bildet.

Das genaue gegenseitige Fluchten der Kanäle 10 und 24 bzw. 20 und 26 wird dadurch gewährleistet, daß die Position des in den äußeren Gehäusekörper 22 eingesetzten Innengehäuses 2 der Ventileinheit 1 längs der Ventilnadelachse axial durch quer zu dieser Achse aufeinanderstoßende Konturflächen dieser Bauteile und durch parallel zur Ventilachse aneinanderstoßende Konturflächen in Verdrehrichtung definiert ist. Konstruktiv ist diese Positionierung durch eine dem Innengehäuse 2 angeformte stegartige Nase 34 realisiert, die in Fig. 1 und auch in Fig. 3 erkennbar ist.

Bei anderen, nicht dargestellten Ausführungsbeispielen der Erfindung sind nur die Einlaßkanäle 10 und 24 als Stichleitung vorgesehen, während das Innengehäuse 2 an der gegenüberliegenden Seite ohne Rücklaufkanal geschlossen ist.

Der Funktionszweck des betrachteten Ventils ist das Öffnen und Schließen der Verbindung zwischen dem Materialeinlaßkanal 10 und einem Auslaßkanal 40, der bei diesem Beispiel senkrecht zu der die Achsen der Ventilnadel 6 und der Kanäle 10, 20, 24 und 26 enthaltenden Ebene geradlinig durch den Gehäusekörper 22 führt. Eines der wesentlichen Merkmale der hier beschriebenen Ventilanordnung ist die langgestreckte Querschnittsform dieses Auslaßkanals 40 in der zu seiner Kanalachse senkrecht liegenden Ebene. Die Längsseiten der Querschnittsfläche des Kanals 40 sind gerade, so daß seine von den Öffnungen der Ventileinheit 1 und weiterer an den Kanal 40 angeschlossener Einheiten unterbrochenen Innenwände eben sind, wobei die in Fig. 1 obere Längsseite bei geschlossenem Ventil mit der ebenen Stirnfläche 19 der Ventilnadel 6 fluchten kann. Dagegen sind die Schmalseiten der Querschnittsfläche des Kanals 40 aus den eingangs erläuterten Gründen rund geformt, so daß sich ein annähernd ovaler Querschnitt ergibt. Die Richtung der Längsseiten liegt bei dem beschriebenen Beispiel parallel zu den Kanälen 10, 20, 24, 26. Wie ebenfalls schon erwähnt wurde, soll die Querschnittsform möglichst (und insoweit eventuell abweichend von der schematischen Darstellung der Zeichnung) keine wesentlichen Ecken aufweisen, doch wird schon durch die Rundung der Schmalseiten an sich eine gute Spülbarkeit erreicht.

Bei dem in Fig. 1 dargestellten Beispiel ist achsgleich auf der der Ventileinheit 1 gegenüberliegenden Seite des gemeinsamen Auslaßkanals 40 eine zweite Ventileinheit 1' angeordnet, die genau mit der Einheit 1 übereinstimmt und z.B. in einem Farbwechsler zur Einleitung von Beschichtungsmaterial einer zweiten Farbe dient. Weitere Ventileinheiten können in an sich bekannter Weise reihenartig längs der Achse des Auslaßkanals 40 seitlich neben den'Einheiten 1 bzw. 1' an den Auslaßkanal angeschlossen sein.

Anstelle einer oder mehrerer der modulartig an den Kanal 40 angeschlossenen Ventileinheiten können auch andere Module mit anderen Funktionen eingesetzt werden, beispielsweise ein Drucksensor, bei denen sich derselbe Vorteil des störungsfreien Übergangs an der ebenen Kanalwand ergibt wie bei den Ventilen.

Bei dem in Fig. 1 dargestellten Beispiel wird das Ventil pneumatisch betätigt, und zwar durch Druckluft, die bei 42 in ein um 360° drehbar auf dem Endgehäuse 4 sitzendes deckelartiges Steuergehäuse 44 eintritt und durch einen (in Fig. 2 gestrichelt angedeuteten) inneren Kanal in einen Ringraum 46 gelangt, wo sie die Ventilnadel 6 mit einem Kolben 48 gegen die Kraft der Feder 8 nach unten in Öffnungsstellung drückt. Die Drehbarkeit des Gehäuses 44 erlaubt den Eintritt des Druckluftschlauches aus beliebiger Richtung.

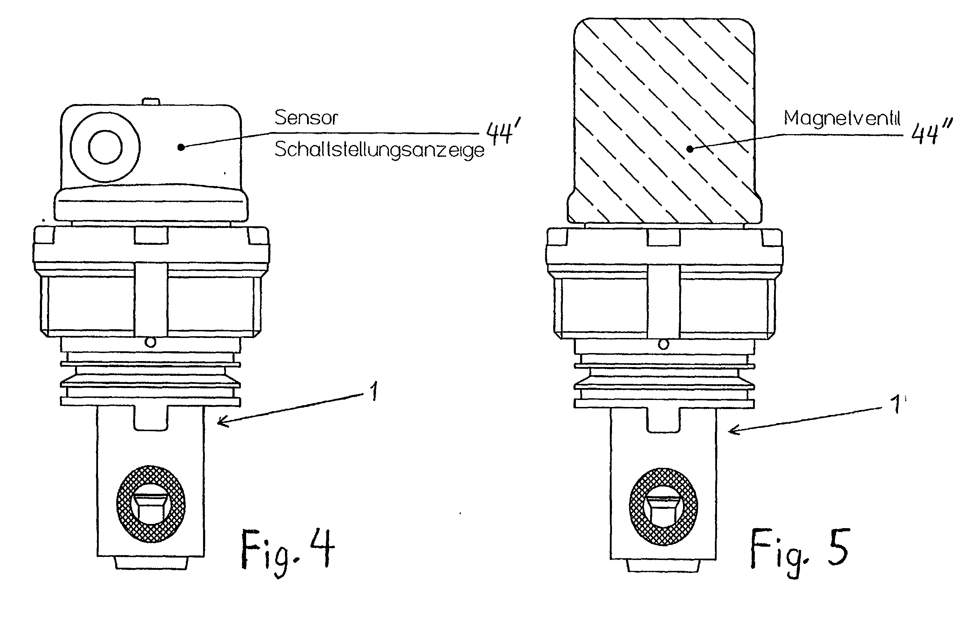

Die beschriebene Ventilanordnung ist in besonders zweckmäßiger Modulbauweise ausgeführt. Während eine Moduleinheit aus der Ventileinheit 1 mit den Innen- und Endgehäusen 2 bzw. 4 besteht, bildet das Steuergehäuse 44 eine eigene Moduleinheit, die lösbar und gegen ein anderes Steuergehäuse auswechselbar ist. Hierfür kommt u.a. das in Fig. 4 dargestellte Deckelgehäuse 44' in Betracht, das einen die Schaltstellung der Ventilnadel 6 feststellenden Schaltstellungssensor (nicht dargestellt) enthält, der ein entsprechendes Schaltstellungssignal für ein externes Steuersystem erzeugt. Es können pneumatisch oder elektrisch wirkende Schaltstellungssensoren angebracht werden. Beispielsweise kann ein magnetischer Teil oder Ansatz der Ventilnadel einen mechanischen oder elektrischen Magnetschalter betätigen. Auch ein mit Reflexion arbeitender optischer Sensor ist denkbar. Die Signalrückmeldung der Nadelstellung vermeidet den bei bekannten Ventilen auftretenden Nachteil, daß es wegen unterschiedlicher und nicht genau definierbarer Schaltzeiten zu Steuerüberschneidungen und entsprechenden Prozeßstörungen kommen kann. Auch wird eine genaue und vollständige Prozeßdatendokumentation ermöglicht. Die Schaltstellung des Ventils kann auch unmittelbar sichtbar angezeigt werden.

Eine andere Möglichkeit ist die Verwendung eines Steuergehäuses mit einer elektromagnetischen Betätigungssteuereinrichtung, beispielsweise des in Fig. 5 dargestellten Magnetventils 44", das mit dem oberen Ende der Ventilnadel 6 kuppelbar ist. Der Einbau eines Magnetventils in den Deckel eines Farbsteuerventils hat an sich den Vorteil der direkten elektrischen Ansteuerung (vorzugsweise Bus-Ansteuerung) mit kürzesten Schaltzeiten ohne die bei pneumatischer Steuerung erforderlichen Schläuche.

## Patentansprüche

1. Ventilanordnung mit einer Ventileinheit (1) zur Steuerung des Materialflusses in einer Beschichtungsanlage mit einem ersten Kanal (10) für das Beschichtungsmaterial, der durch den Innenraum (12) der Ventileinheit (1) mit einer Öffnung (14) verbunden ist, die einen Ventilsitz (16) bildet,
einer koaxial zu dem Ventilsitz (16) in der Ventileinheit (1) verschiebbar gelagerten Ventilnadel (6), die eine bei geschlossenem Ventil an dem Ventilsitz (16) anliegende Dichtfläche (18) hat,
und einem quer zu der Achse der Ventilnadel (6) verlaufenden zweiten Kanal (40),
wobei der zweite Kanal (40) in der senkrecht zu seiner geradlinigen Kanalachse liegenden Ebene eine langgestreckte Querschnittsfläche hat und die Schmalseiten dieser Querschnittsfläche rund geformt sind,
**dadurch gekennzeichnet, dass** der zweite Kanal (40) auf der dem ersten Kanal (10) abgewandten Seite des Ventilsitzes (16) an den Ventilsitz (16) angrenzt,
und dass die Längsrichtung der langgestreckten Querschnittsfläche des zweiten Kanals (40) quer zu der Achse der Ventilnadel (6) verläuft.

2. Ventilanordnung nach Anspruch 1, **dadurch gekennzeichnet, dass** die Längsseiten der Querschnittsfläche des zweiten Kanals (40) gerade sind.

3. Ventilanordnung nach Anspruch 2, **dadurch gekennzeichnet, dass** die eine Längsseite bei geschlossenem Ventil wenigstens annähernd mit der ebenen Stirnfläche (19) der Ventilnadel (6) fluchtet.

4. Ventilanordnung nach einem der vorhergehenden Ansprüche, **dadurch gekennzeichnet, daß** die Längs- und Schmalseiten der annähernd ovalen Querschnittsfläche des zweiten Kanals (40) ohne wesentliche Ecken ineinander übergehen.

5. Ventilanordnung nach einem der vorangehenden Ansprüche, **dadurch gekennzeichnet, daß** der zweite Kanal (40) durch ein Spritzguß- oder sonstiges Formverfahren in einem geformten Gehäuseblock (22) gebildet ist.

6. Ventilanordnung nach Anspruch 1, **dadurch gekennzeichnet, daß** der Innenraum (12) der Ventileinheit (1) von einem zu der Ventilnadel (6) koaxialen allgemein zylindrischen Innengehäuseteil (2) umschlossen ist, durch das quer zu der Achse der Ventilnadel (6) ein zylindrischer Kanal (10) führt,
daß das Innengehäuseteil (2) in einem äußeren Gehäusekörper (22) montiert ist, durch den ein mit dem Kanal (10) fluchtender Materialzufuhrkanal (24) führt, und daß zwischen der zylindrischen Außenfläche des Innengehäuseteils (2) und der das Innengehäuseteil umschließenden hohlzylindrischen Innenfläche des äußeren Gehäusekörpers (22) ein die Verbindungsstelle der beiden Kanäle (10,24) umgebendes ringförmiges Dichtungselement (30) sitzt, so daß der von dem Dichtungselement (30) gebildete Ring entsprechend den zylindrischen Flächen des Innengehäuseteils (2) und des äußeren Gehäusekörpers (22) gebogen ist.

7. Ventilanordnung nach Anspruch 6, **dadurch gekennzeichnet, daß** das ringförmige Dichtungselement (30) in eine den Kanal (10,24) umgebende ringförmige Nut (32) in der zylindrischen Außenfläche des Innengehäuseteils (2) oder des äußeren Gehäusekörpers (22) eingesetzt und mit einem angeformten flachen Ringflansch (31) versehen ist, der sich über die dem Kanal (10,24) zugewandte Kante der Nut (32) und die angrenzende zylindrische Gehäuseaußenfläche bis zu dem Kanal (10,24) erstreckt.

8. Ventilanordnung nach einem der vorangehenden Ansprüche, **dadurch gekennzeichnet, daß** die Ventileinheit (1) eine pneumatische oder elektromagnetische Betätigungssteuerung für die Ventilnadel (6) enthält.

9. Ventilanordnung nach einem der vorangehenden Ansprüche, **dadurch gekennzeichnet, daß** ein Innengehäuse (2) der Ventileinheit (1) wahlweise mit einem eine pneumatische Steuereinrichtung enthaltenden Gehäuse (44) oder stattdessen mit einer eine elektromagnetische Steuereinrichtung (44") enthaltenden Gehäuse verbindbar ist, wobei diese Steuergehäuse gegeneinander austauschbar montiert sind.

10. Ventilanordnung nach Anspruch 1, **dadurch gekennzeichnet, daß** an oder in einem Steuergehäuse (44') der Ventileinheit (1) ein die Schaltstellung der Ventilnadel (6) feststellender Schaltstellungssensor angebracht ist, der ein entsprechendes Schaltstellungssignal für ein externes Steuersystem erzeugt.

11. Ventilanordnung nach einem der vorangehenden Ansprüche, **dadurch gekennzeichnet, daß** der erste Kanal (10) auf der ihm zugewandten, dem zweiten Kanal (40) abgewandten Seite des Ventilsitzes (16) mit einem Rücklaufkanal (26) auf der gegenüberliegenden Seite des Innenraums (12) in Verbindung steht, durch den das Beschichtungsmaterial in einem Materialumlaufsystem zirkuliert, und daß diese Kanäle und die sie umgebenden Gehäuseteile ggf. einschließlich zu den Kanälen koaxial angeordneter ringförmiger Dichtungselemente (30,30') symmetrisch bezüglich der Ventilnadelachse ausgebildet sind.

12. Ventilanordnung nach einem der vorangehenden Ansprüche, **dadurch gekennzeichnet, daß** auf der dem Ventilsitz (16) gegenüberliegenden Seite des zweiten Kanals (40) eine weitere Ventileinheit (1') angeordnet ist, daß die beiden Ventileinheiten (1,1') bezüglich des zweiten Kanals (40) symmetrisch ausgebildet und angeordnet sind, und daß eine Reihe mehrerer im wesentlichen gleich ausgebildeter Ventileinheiten nebeneinander an dem ihnen gemeinsamen Kanal (40) angeordnet sind.

13. Ventilanordnung nach einem der vorangehenden Ansprüche, **dadurch gekennzeichnet, daß** die Position eines in einen äußeren Gehäusekörper (22) eingesetzten Innengehäuses (2) der Ventileinheit (1) längs der Ventilnadelachse axial durch quer zu dieser Achse aufeinanderstoßende Konturflächen (34) dieser Bauteile und durch parallel zur Ventilnadelachse aneinanderstoßende Konturflächen (34) in Verdrehrichtung definiert ist.

14. Ventilanordnung nach einem der vorhergehenden Ansprüche, **dadurch gekennzeichnet, daß** an den zweiten Kanal (40) modulartig mehrere Baueinheiten angeschlossen sind, von denen mindestens eine aus einer Ventileinheit (1,1') besteht, während eine weitere Baueinheit einen Drucksensor oder sonstigen Sensor enthält.

## Claims

1. A valve arrangement with a valve unit (1) for controlling the flow of material in a coating installation with a first passage (10) for the coating material, which is connected through the interior (12) of the valve unit (1) to an opening (14), which constitutes a valve seat (16), a valve needle (6), which is mounted to be movable in the valve unit (1) coaxially with the valve seat (16) and has a sealing surface (18), which engages the valve seat (16) when the valve is closed, and a second passage (40) extending transversely to the axis of the valve needle (6), the second passage (40) having an elongate cross-sectional area in a plane extending perpendicular to its straight passage axis and the narrow sides of this cross-sectional area being of round shape, **characterised in that** the second passage (40) adjoins the valve seat (16) on the side of the valve seat (16) remote from the first passage (10) and that the longitudinal direction of the elongate cross-sectional area of the second passage (40) extends transversely to the axis of the valve needle (6).

2. A valve arrangement as claimed in Claim 1, **characterised in that** the long sides of the cross-sectional area of the second passage (40) are straight.

3. A valve arrangement as claimed in Claim 2, **characterised in that** the one long side is at least approximately in alignment with the flat end surface (19) of the valve needle (6), when the valve is closed.

4. A valve arrangement as claimed in one of the preceding claims, **characterised in that** the long and narrow sides of the approximately oval cross-sectional area of the second passage (40) merge into one another without substantial corners.

5. A valve arrangement as claimed in one of the preceding claims, **characterised in that** the second passage (40) is formed by a die-casting or other shaping method in a shaped housing block (22).

6. A valve arrangement as claimed in Claim 1, **characterised in that** the interior (12) of the valve unit (1) is surrounded by a generally cylindrical inner housing portion (2) coaxial with the valve needle (6), through which a cylindrical passage (10) extends transversely to the axis of the valve needle (6), that the inner housing portion (2) is mounted in an outer housing body (22), through which a material supply passage (24) in alignment with the passage (10) extends and that between the cylindrical outer surface of the inner housing portion (2) and the hollow cylindrical inner surface, surrounding the inner housing portion, of the outer housing body (22) there is an annular sealing element surrounding the connection point of the two passages (10, 24) so that the ring defined by the sealing element is bent to correspond to the cylindrical surfaces of the inner housing portion (2) and the outer housing body (22).

7. A valve arrangement as claimed in Claim 6, **characterised in that** the annular sealing element (30) is inserted into an annular groove (32), surrounding the passage (10, 24), in the cylindrical outer surface of the inner housing portion (2) or of the outer housing body (22) and is provided with an integrally formed flat annular flange (31), which extends over the edge of the groove (32) directed towards the passage (10, 24) and the adjoining cylindrical outer surface of the housing to the passage (10, 24).

8. A valve arrangement as claimed in one of the preceding claims, **characterised in that** the valve unit (1) includes a pneumatic or electromagnetic actuation controller for the valve needle (6).

9. A valve arrangement as claimed in one of the preceding claims, **characterised in that** an inner housing (2) of the valve unit (1) is selectively connectable to the housing (44), which contains a pneumatic control device, or alternatively to a housing containing an electromagnetic control device (44'), these control housings being mounted to be interchangeable.

10. A valve arrangement as claimed in Claim 1, **characterised in that** mounted on or in a control housing (44') of the valve unit (1) there is a open-close condition sensor, which determines the open-close condition of the valve needle (6) and produces a corresponding open-close condition signal for an external control system.

11. A valve arrangement as claimed in one of the preceding claims, **characterised in that** the first passage (10) is in communication on the side of the valve seat (16) directed towards it and directed away from the second passage (40) with a return passage (26) on the opposite side of the interior (12), through which the coating material circulates in a material circulating system and that these passages and the housing portions surrounding them, optionally including annular sealing elements (30, 30') disposed coaxially with the passages, are of symmetrical construction with respect to the axis of the valve needle.

12. A valve arrangement as claimed in one of the preceding claims, **characterised in that** disposed on the side of the second passage (40) opposite to the valve seat (16) there is a further valve unit (1'), that the two valve units (1, 1') are constructed and arranged symmetrically with respect to the second passage (40) and that a series of a plurality of valve units of substantially the same construction are arranged next to one another on the passage (40) common to them.

13. A valve arrangement as claimed in one of the preceding claims, **characterised in that** the position of an inner housing (2), inserted into an outer housing body (22), of the valve unit (1) along the axis of the valve needle is defined axially by contour surfaces (34) of these components abutting transversely to this axis and by contour surfaces (34) abutting parallel to the axis of the valve needle in the direction of rotation.

14. A valve arrangement as claimed in one of the preceding claims, **characterised in that** connected to the second passage (40) in a modular manner are a plurality of components, of which at least one comprises a valve unit (1, 1') whilst a further component includes a pressure sensor or other sensor.

## Revendications

1. Ensemble de soupapes avec une unité de soupape (1) pour la commande de l'écoulement de la matière dans une installation de revêtement avec un premier canal (10) pour la matière du revêtement, qui est relié, par le volume intérieur (12) de l'unité de soupape (1), à une ouverture (14) qui forme un siège de soupape (16), un pointeau de soupape (6) monté coulissant dans l'unité de soupape (1), coaxialement au siège de soupape (16), qui présente une surface d'étanchéité (18) s'appliquant contre le siège de soupape (6) lorsque la soupape est fermée, et un deuxième canal (40) s'étendant transversalement à l'axe du pointeau de soupape (6), le deuxième canal (40) présentant une surface de section transversale allongée dans le plan perpendiculaire à son axe rectiligne, et les petits côtés de cette surface de section transversale étant circulaires, **caractérisé en ce que** le deuxième canal (40) est adjacent au siège de soupape (16) sur le côté du siège de soupape (16) tourné à l'opposé du premier canal (10), et **en ce que** la direction longitudinale de la surface de section transversale allongée du deuxième canal (40) s'étend transversalement à l'axe du pointeau de soupape (6).

2. Ensemble de soupapes selon la revendication 1, **caractérisé en ce que** les grands côtés de la section transversale du deuxième canal (40) sont droits.

3. Ensemble de soupapes selon la revendication 2, **caractérisé en ce que** lorsque la soupape est fermée, un grand côté est aligné au moins approximativement avec la face frontale (19) plane du pointeau de soupape (6).

4. Ensemble de soupapes selon l'une des revendications précédentes, **caractérisé en ce que** les grands côtés et les petits côtés de la surface approximativement ovale de la section transversale du deuxième canal (40) se prolongent les uns les autres sans angle sensible.

5. Ensemble de soupapes selon l'une des revendications précédentes, **caractérisé en ce que** le deuxième canal (40) est formé par un procédé d'injection ou autre dans un bloc de boîtier (22) moulé.

6. Ensemble de soupapes selon la revendication 1, **caractérisé en ce que** le volume intérieur (12) de l'unité de soupape (1) est enfermé par une partie dé boîtier intérieure (2) cylindrique généralement coaxiale au pointeau de soupape (6), à travers laquelle un canal (10) passe transversalement à l'axe du pointeau de soupape (6), **en ce que** la partie de boîtier intérieure (2) est montée dans un corps de boîtier (22) extérieur à travers lequel passe un canal d'amenée de matière (24) aligné avec le canal (10), et **en ce qu'**entre la surface extérieure cylindrique de la partie de boîtier intérieure (2) et la surface intérieure cylindrique creuse enfermant la partie de boîtier intérieure, du corps de boîtier (22) extérieur, se trouve un élément d'étanchéité (30) de forme annulaire entourant le point de liaison des deux canaux (10, 24), de sorte que l'anneau formé par l'élément d'étanchéité (30) est courbé conformément aux surfaces cylindriques de la partie de boîtier intérieure (2) et du corps de boîtier extérieur (22).

7. Ensemble de soupapes selon la revendication 6, **caractérisé en ce que** l'élément d'étanchéité (30) de forme annulaire est inséré dans une rainure (32) de forme annulaire entourant le canal (10, 24), dans la surface extérieure cylindrique de la partie de boîtier intérieure (2) ou du corps de boîtier extérieur (22), et est pourvu d'une bride annulaire (31) venue de moulage qui s'étend sur le bord de la rainure (32) tourné vers le canal (10, 24) et la surface extérieure cylindrique adjacente du boîtier jusqu'au canal (10, 24).

8. Ensemble de soupapes selon l'une des revendications précédentes, **caractérisé en ce que** l'unité de soupape (1) contient une commande d'actionnement pneumatique ou électromagnétique pour le pointeau de soupape (6).

9. Ensemble de soupapes selon l'une des revendications précédentes, **caractérisé en ce qu'**un boîtier intérieur (2) de l'unité de soupape (1) peut être relié au choix à un boîtier (44) contenant un dispositif de commande pneumatique ou, à la place de ceci, à un boîtier contenant un dispositif de commande électromagnétique (44"), ces boîtiers de commande étant montés de manière interchangeable.

10. Ensemble de soupapes selon la revendication 1, **caractérisé en ce que** sur ou dans un boîtier de commande (44') de l'unité de soupape (1) est placé un capteur de position de commutation constatant la position de commutation du pointeau de soupape (6), lequel produit un signal de position de commutation correspondant pour un système de commande externe.

11. Ensemble de soupapes selon l'une des revendications précédentes, **caractérisé en ce que** le premier canal (10) est en liaison, sur le côté du siège de soupape (16) tourné vers celui-ci et tourné à l'opposé du deuxième canal (40), avec un canal de retour (26) sur le côté opposé du volume intérieur (12), canal de retour à travers lequel circule la matière de revêtement dans un système de circulation de matière, et **en ce que** ces canaux et les parties de boîtier qui les entourent éventuellement avec des éléments d'étanchéité (30, 30') de forme annulaire disposés coaxialement aux canaux, sont réalisés symétriques par rapport à l'axe du pointeau de soupape.

12. Ensemble de soupapes selon l'une des revendications précédentes, **caractérisé en ce que** sur le côté du deuxième canal (40) opposé au siège de soupape (16), est disposée une autre unité de soupape (1'), **en ce que** les deux unités de soupape (1, 1') sont réalisées et disposées symétriquement par rapport au deuxième canal (40), et **en ce qu'**une série de plusieurs unités de soupape réalisées sensiblement identiques sont disposées côte à côte sur le canal (40) qui leur est commun.

13. Ensemble de soupapes selon l'une des revendications précédentes, **caractérisé en ce que** la position d'un boîtier intérieur (2) de l'unité de soupape (1), inséré dans un corps de boîtier extérieur (22), le long de l'axe du pointeau de soupape axialement, est définie dans le sens de rotation par des surfaces de contour (34) de ces composants, butant les unes sur les autres transversalement à cet axe, et par des surfaces de contour (34) butant les unes contre les autres parallèlement à l'axe du pointeau de soupape.

14. Ensemble de soupapes selon l'une des revendications précédentes, **caractérisé en ce qu'**au deuxième canal (40) sont raccordées plusieurs unités de construction de type modulaire dont au moins une est constituée d'une unité de soupape (1, 1'), tandis qu'une autre unité de construction contient un capteur de pression ou autre capteur.
